# EUROPEAN PATENT SPECIFICATION

(11) **EP 4 428 734 B1**
(45) Date of publication and mention of the grant of the patent: **10.09.2025**
(21) Application number: 24162222.4
(22) Date of filing: 08.03.2024
(51) Int. Cl.: G06F 21/60, G06F 21/53

(54) **SECRET MANAGEMENT**
GEHEIMVERWALTUNG
GESTION DE SECRET

(30) Priority: 09.03.2023 US 202318181239
(43) Date of publication of application: 11.09.2024
(73) Proprietor: Oracle International Corporation, Redwood Shores, CA 94065 (US)
(72) Inventor: JUNEJA, Rohit, Redwood Shores, 94065 (US); PAI, Sandesh, Redwood Shores, 94065 (US)
(74) Representative: D Young & Co LLP

(56) References cited:
- EP-A1- 3 644 206
- US-A1- 2022 012 373
- US-A1- 2023 037 986

## Description

### FIELD

Various embodiments of the present technology generally relate to management of secrets within a software container environment, such as Kubernetes (sometimes stylized as K8s). More specifically, embodiments of the present technology relate to systems and methods for the addition or removal of secrets from application pods without the need to restart the application pod.

### BACKGROUND

In containerized software environments such as Kubernetes, a secret may be a data object that contains sensitive data, such as a digital certificate, key, or password. The computing pods or applications may utilize the secrets to access or control access to restricted resources, such as by providing a token or digital authentication certificate. In order to provide a pod or application with access to the secret, the secret may need to be mounted to the pod or software, creating a directory or volume accessible by the pod or application. However, adding new secrets, or removing existing secrets, may require restarting a pod and associated microservices or applications. Restarting a pod in this manner can cause service impacts or potential service downtime, lowering a quality of service and degrading client satisfaction.

The information provided in this section is presented as background information and serves only to assist in any understanding of the present disclosure. No determination has been made and no assertion is made as to whether any of the above might be applicable as prior art with regard to the present disclosure.
US 2023/0037986 Al relates to an autoencryption system for data in a container.

### SUMMARY

Particular aspects are set out in the appended independent claims. Various optional embodiments are set out in the dependent claims.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Certain approaches described herein may provide for improved management of secrets.

Various embodiments herein relate to systems, methods, and computer-readable storage media for performing secret management. In an embodiment, a secret management system may comprise one or more processors, and a memory having stored thereon instructions that, upon execution by the one or more processors, cause the one or more processors to implement a secret management process to enable secrets to be added to an application pod of a virtual software environment without restarting the application pod, a secret including a data object containing sensitive data. The secret management system may monitor for creation of a first secret in the virtual software environment, append a name of the first secret to a key file from the first secret to produce an appended key file, and store the appended key file to a super secret, the super secret including a specialized secret configured to contain key files from multiple secrets.

In some embodiments, the secret management system may determine whether the first secret includes a selected metadata label, and in response to the first secret not including the selected metadata label, do not append the name of the first secret to the key file or store the appended key file to the super secret. Further, the secret management system may, in response to determining the first secret includes the selected metadata label, determine a first value associated with the selected metadata label and a first namespace associated with the first secret, and determine whether the first value corresponds to an existing super secret in the first namespace. In response to determining the first value does correspond to an existing super secret in the first namespace, the secret management system may store the appended key file to the super secret as the existing super secret. In some embodiments, the secret management system may detect creation of a second secret having a second namespace associated with the second secret, the selected metadata label, and a second value associated with the selected metadata label that is the same as the first value. The secret management system may determine whether the second namespace is the same as the first namespace, and when the second namespace is different than the first namespace, generate a new super secret in the second namespace, and store a second appended key file from the second secret to the new super secret. When the second namespace is the same as the first namespace, the secret management system may store the second appended key file from the second secret to the super secret in the first namespace. In response to determining the first value does not correspond to an existing super secret in the first namespace, the secret management system may generate the super secret, including setting a name for the super secret based on the first value, and mount the super secret to the application pod during initialization of the application pod, including storing the appended key file to a directory accessible to the application pod. In some embodiments, the secret management system may detect creation of a second secret in the virtual software environment, append a second name of the second secret to a second key file from the second secret to produce a second appended key file, and store the second appended key file to the super secret. In another example embodiment, the secret management system may receive a digital certificate at a certificate manager, and generate, via the certificate manager, the first secret based on the digital certificate. In some embodiments, the secret management system may initiate the virtual software environment as a Kubernetes cluster, initiate the application pod after initiation of the Kubernetes cluster, mount the super secret to the application pod during initiation of the application pod, add secret key files to the super secret without restarting the application pod, and remove the secret key files from the super secret without restarting the application pod.

In an alternative embodiment, a method may comprise operating a secret management system to enable secrets to be added to an application pod of a virtual software environment without restarting the application pod, a secret including a data object containing sensitive data, including monitoring for creation of a first secret in the virtual software environment, appending a name of the first secret to a key file from the first secret to produce an appended key file, and storing the appended key file to a super secret, the super secret including a specialized secret configured to contain key files from multiple secrets.

### BRIEF DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
FIG. 1 is a diagram of a system configured to perform secret management, in accordance with certain embodiments of the present disclosure;
FIG. 2 is a diagram of a system configured to perform secret management, in accordance with certain embodiments of the present disclosure;
FIG. 3 is a diagram of a system configured to perform secret management, in accordance with certain embodiments of the present disclosure;
FIG. 4 is a diagram of a system configured to perform secret management, in accordance with certain embodiments of the present disclosure;
FIG. 5 is a diagram of a system configured to perform secret management, in accordance with certain embodiments of the present disclosure;
FIG. 6 is a diagram of a system configured to perform secret management, in accordance with certain embodiments of the present disclosure;
FIG. 7 is a diagram of a system configured to perform secret management, in accordance with certain embodiments of the present disclosure;
FIG. 8 depicts a flowchart of an example method to perform secret management, in accordance with certain embodiments of the present disclosure;
FIG. 9 depicts a flowchart of an example method to perform secret management, in accordance with certain embodiments of the present disclosure; and
FIG. 10 illustrates a computing system configured to perform secret management, in accordance with some embodiments of the present technology.

Some components or operations may be separated into different blocks or combined into a single block for the purposes of discussion of some of the embodiments of the present technology. Moreover, while the technology is amendable to various modifications and alternative forms, specific embodiments have been shown by way of example in the drawings and are described in detail below. The intention, however, is not to limit the technology to the particular embodiments described. On the contrary, the technology is intended to cover all modifications, equivalents, and alternatives falling within the scope of the technology as defined by the appended claims.

### DETAILED DESCRIPTION

In the following detailed description of certain embodiments, reference is made to the accompanying drawings which form a part hereof, and in which are shown by way of illustration of example embodiments. It is also to be understood that features of the embodiments and examples herein can be combined, exchanged, or removed, other embodiments may be utilized or created, and structural changes may be made without departing from the scope of the present disclosure. The following description and associated figures teach the principles and techniques for understanding the scope encompassed by the appended claims.

In accordance with various embodiments, the methods and functions described herein may be implemented as one or more software programs running on a computer processor or controller. Dedicated hardware implementations including, but not limited to, application specific integrated circuits, programmable logic arrays, and other hardware devices can likewise be constructed to implement the methods and functions described herein. Methods and functions may be performed by modules or nodes, which may include one or more physical components of a computing device (e.g., logic, circuits, processors, etc.) configured to perform a particular task or job, or may include instructions that, when executed, can cause a processor to perform a particular task or job, or any combination thereof. Further, the methods described herein may be implemented as a computer readable storage medium or memory device including instructions that, when executed, cause a processor to perform the methods.

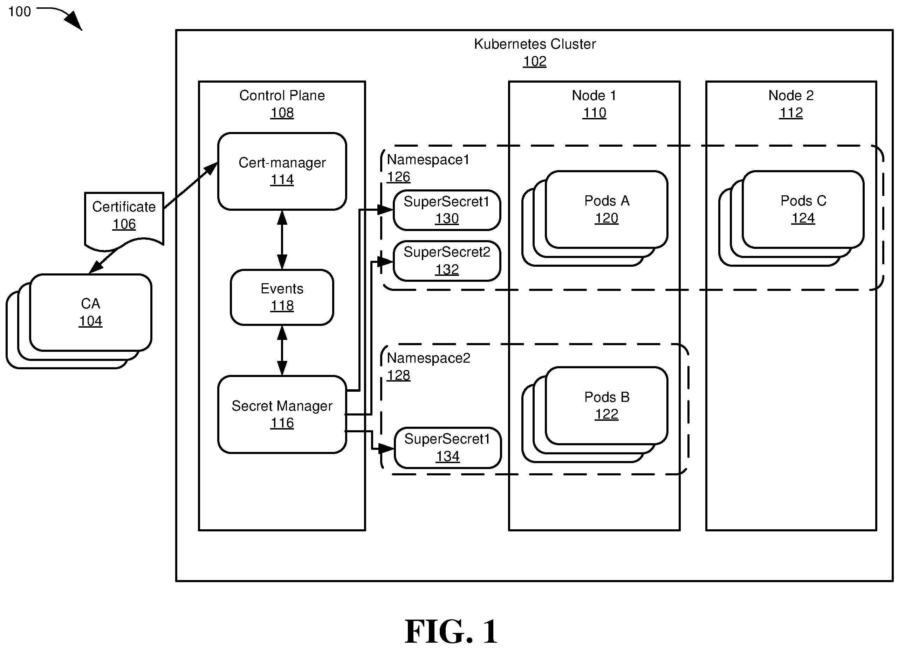

FIG. 1 is a diagram of a system 100 configured to perform secret management, in accordance with certain embodiments of the present disclosure. The example system 100 may include a Kubernetes container orchestration system, although the present disclosure may apply to other containerized application systems. Containers may refer to a virtualized software execution environment, in which applications running within the container only have access to resources assigned to the container, rather than all resources of the underlying physical computing system on which the container is running. For example, a container may include a Linux executable packaged with all necessary dependency and configuration files, such that the container is self-sufficient for running all applications of the container. The system 100 may include a Kubernetes cluster 102, which may receive one or more digital certificates 106 from one or more certificate authorities (CA) 104, for example via one or more network connections.

A CA 104 may be a trusted third-party entity that stores, signs, and issues digital certificates 106 for the purposes of cryptography and digital identity or authorization verification. A digital certificate 106 (sometimes called a public key certificate or identity certificate) may certify the ownership of a public key by the named subject of the certificate. The certificate allows other parties to rely upon signatures or on assertions made about the private key that corresponds to the certified public key, for example by verifying that the certificate was issued by a trusted CA. In some examples, certificates 106 may be specified by the X.509 International Telecommunication Union (ITU) standard or EMV (Europay, Mastercard, and Visa) smart card standard. CAs 104 may be implemented via one or more devices, systems, or modules that can issue or validate digital certificates 106. Digital certificates 106 may include electronic documents that provide information about a public key, the identity of the owner (sometimes called the subject), and a digital signature of the CA (sometimes called the issuer).

A Kubernetes cluster 102 may include a set of components used to implement containerized applications. The cluster 102 may include a control plane 108, and one or more nodes, such as Node 1 110 and Node 2 112.

The nodes 110, 112 may include worker machines that each host one or more pods, such as Pods A 120 and Pods B 122 of Node 1 110, and Pods C 124 of Node 2 112. A pod may model an application-specific "logical host": and may contain one or more applications, with shared storage and network resources, and a specification for how to run the containers. A pod's contents may be co-located and co-scheduled, and may be run in a shared context. Pods may be grouped according to a namespace, such as Namespace 1 126 and Namespace 2 128.

Namespaces 126, 129 may provide a mechanism for isolating groups of resources within a single cluster 102. Names of resources may need to be unique within a namespace, but not between different namespaces. Namespaces may provide a way to divide cluster 102 resources between multiple users (e.g., via resource quotas). Namespaces may include multiple pods distributed across multiple nodes, or may only include one or more pod from a single node. In the depicted example of FIG. 1, Namespace 1 125 may include Pods A 120 from Node 1 110 and Pods C 124 from Node 2 112, while Namespace 2 128 may only include Pods B 122 from Node 1 110.

A control plane 108 may include one or more components, such as software modules and data structures, which can manage the worker nodes 110, 112 and the pods 120-124 of a cluster 102. The control plane 108 (and its components) may run across multiple computers. In the depicted example of system 100, the control plane 108 may include a cert-manager 114 (or certificate manager), a secret manager 116, and an event log 118.

The cert-manager 114 may be a certificate controller configured to obtain certificates 106 from one or more CAs 104 (e.g., both public and private issuers), ensure the certificates are valid and up-to-date, and renew certificates before they expire. In order for the application pods 120-124 to use certificates 106, the cert-manager 114 may 'consume' a certificate 106 (e.g., by extracting information from the certificate) to generate a secret including data elements relevant for the certificate.

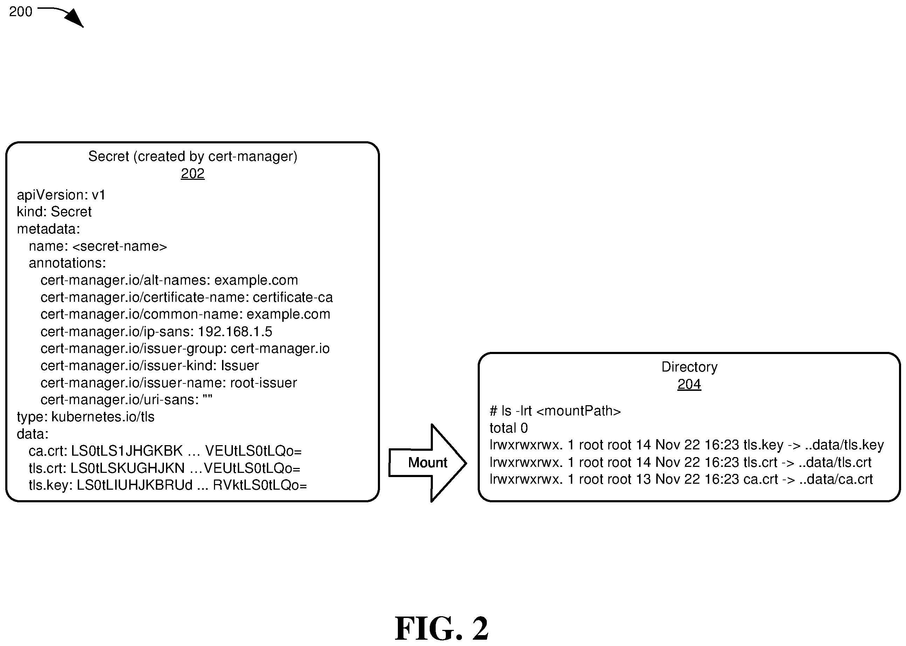

In one implementation, the secrets generated by the cert-manager 114 may be mounted for use by one or more pods 120-124. When a new certificate is needed for an already-running pod 120-124, the cert-manager 114 may create a new secret, and the application pod may need to mount the secret and restart the application pod. Similarly, when an already-mounted secret needs to be removed or deleted, it may need to be unmounted from application pod(s), which may then need to be restarted. The process of creating and mounting secrets, and application pod restarts, is discussed in further detail in regard to FIG. 2.

FIG. 2 is a diagram of a system 200 configured to perform secret management, in accordance with certain embodiments of the present disclosure. In particular, the example system 200 may depict data objects representing a secret 202 and a directory 204 the secret 202 may be created when the secret is mounted for use by an application pod.

When a cert-manager 114 receives a digital certificate 106, it may generate a secret 202 based on the certificate. The secret 202 may include a data object having a variety of fields, such as an API Version, a "kind" of the object, a "type", a number of metadata fields (e.g., including a 'name' for the object, and a number of annotations), and a number of 'data' fields. The data fields may include files or objects associated with the secret 202 or certificate 106. For example, secret 202 may include objects designated "ca.crt," "tls.crt," and "tls.key," each of which may include a hash or other value fields that may represent a cryptographic value used for authentication, verification, or encryption.

The secret 202 may be accessed by application pods 120-124 through a volume mount operation, which may mount a volume or directory 204 to a pod 120-124. A volume may be a type of directory 204 which may be accessible to containers in a pod 120-124. The directory 204 may be located at a "mount path," and may show files equal to the number of keys in the "data" field of secret 202. For example, the director 204 may include files for "tls.key," "tls.crt", and "ca.crt" as in the secret 202.

Adding a new certificate may require mounting the new secret 202 to a directory 204 to be accessible by a pod 120-124. However, the new secret 202 cannot be mounted on the same location or directory 204 as the first secret, because the new secret can contain the same fields as the first secret (e.g,, tls.key, tls.crt, ca.crt), resulting in attempting to place multiple "files" with the same name in the same location. So to access a new secret, a new volumeMount may be needed with a new MountPath, which in turn may require restarting the pod(s) 120-124. Similarly, removing an existing certificate 106 may include deleting an existing volumeMount directory 204, which can also require restarting the pod(s) 120-124.

While the example provided herein relates to secrets created from digital certificates 106, the requirement to restart application pods 120-124 can apply to other types of secrets as well. The process of restarting the application pods 120-124 every time a new secret needs to be mounted or deleted can cause service interruptions or other problems. An alternative embodiment that avoids restarting the pods 120-124 is discussed herein.

Returning to FIG. 1, in another implementation, a secret manager 116 may be added to the Kubernetes cluster 102. The secret manager 116 may include a Custom Operator (which in turn may have a custom controller), which can be added to the control plane 108. The secret manager can create a new type of secret, which may be referred to as a super secret or SuperSecret, such as SuperSecret1 130, SuperSecret2 132, and SuperSecret1 134. A super secret can enable secrets to be added to or removed from a pod 120-124 without restarting the pod.

When a secret is generated by cert-manager 114, details about the secret may be added to an event log 118. There may be separate event logs 118 for each namespace 126, 128, or a single event log may cover multiple namespaces. The secret manager 116 may monitor the event log(s) 118 (potentially for multiple or all namespaces 126, 128), and may filter the events to only retrieve secrets containing a specified metadata label known by the secret manager. For example, a metadata label "secret-manager.io/identifier: <identifier Name>" may be added to secrets by the cert-manager 114 and recorded in the event log 118 along with newly created events, which label can be used to filter events 118 for relevant secrets by the secret manager 116. The secret manager can be configured to recognize or use other key/value pairs for the searchable metadata or label. Based on the identifier label value (e.g., the <identifier name> value), the secret manager 116 can create a new super secret, having the label value as its own name, to act as a compilation of other secrets.

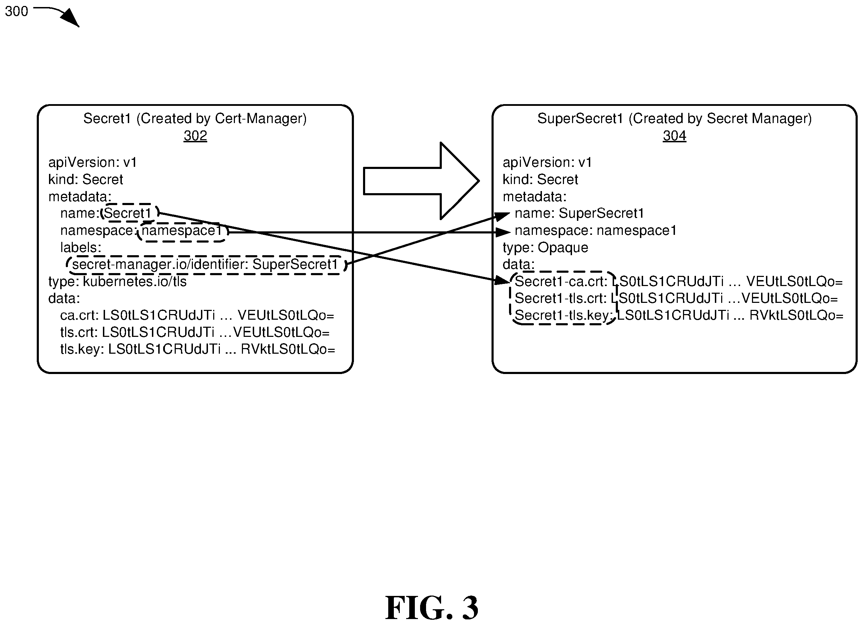

Super secrets may need to have unique names within a single namespace 126, 128, but not across namespaces. For example, a super secret with the name SuperSecret1 130 can be created in namespace1 126, and another super secret with the same name SuperSecret1 134 can be created in namespace2 128. Another super secret, SuperSecret2 132 having a different name can be added to the same namespace 1 126 as SuperSecret1 130. All pods within a namespace may have access to the super secrets for that namespace, even across nodes 110, 112. For example, Pods A 120 and Pods C 124 in namespace 1 126 may have access to SuperSecret1 130 and SuperSecret 2 132. The creation of a super secret is discussed in further detail in regard to FIG. 3.

FIG. 3 is a diagram of a system 300 configured to perform secret management, in accordance with certain embodiments of the present disclosure. In particular, the example system 300 may depict data objects representing a secret (secret1) 302 and a super secret (SuperSecret1) 304.

A cert-manager 114 may create secret1 302 (for example, based on receipt of a certificate 106). The cert-manager 114 may be configured to include a selected or specified metadata key/value identifier label in secret1 302. In this example, the identifier label may be "secret-manager.io/identifier", and the identifier value may be "SuperSecretl". Secret1 302 may also include a number of data elements, such as "ca.crt", "tls.crt", and "tls.key". The creation of secret1 302 may be added to an event log 118, which may record some or all of the content of secret1 302 including the label.

The secret manager 116 may monitor the event log 118, filtered according to the identifier label (e.g., secret-manager.io/identifier). When a secret having an expected identifier label is found, the secret manager 116 may determine a namespace for the secret, and a value for the identifier. In this case, secret1 302 was created in namespace1, and the identifier value was SuperSecret1.

The secret manager 116 may determine whether a super secret having a name equal to the identifier value exists in the determined namespace. If not, the secret manager 116 may create a new super secret in the identified namespace having a name set to the identifier value from secret1 302. In this case, the secret manager 302 would create a super secret named SuperSecret1 304 in namespace 1. Secrets (including super secrets) may be created as having various "types". The type of secret1 302 may be TLS (e.g., kubernetes.io/tls), which type may always include the three data elements or keys described herein (e.g., ca.crt, tls.crt, and tls.key, with values from the keys being a cryptographic string as depicted). The SuperSecret1 304 may be created with a type "opaque", which may give flexibility to define any number of keys with any number of values. The secret manager 116 may also copy of the data elements from Secret1 302 to SuperSecret1 304, while appending the name of Secret1 to the data fields. For example, this may add three data elements to SuperSecret 1 304, being Secret1-ca.crt, Secret1-tls.crt, and Secret1-tls.key. The values for the keys may be transferred unaltered from Secret1 302 to SuperSecret1 304. The newly created SuperSecret1 304 may be mounted for access by one or more pods, potentially during initial creation or startup of a pod.

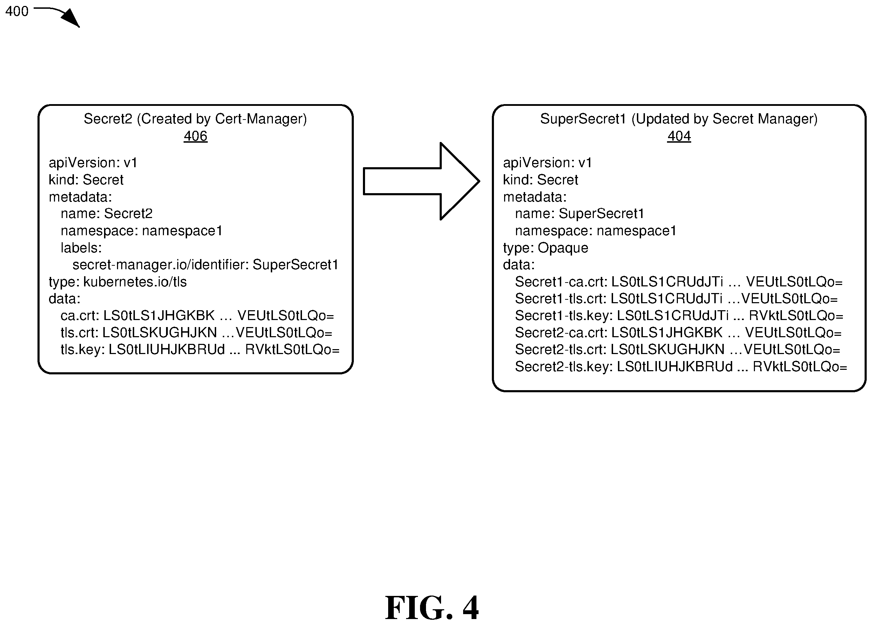

However, if a super secret with the identifier value from Secret1 302 already exists in the namespace from Secret1, then the secret manager 116 may perform a process as described in regard to FIG. 4.

FIG. 4 is a diagram of a system 400 configured to perform secret management, in accordance with certain embodiments of the present disclosure. In particular, the example system 400 may depict data objects representing a secret (secret2) 406 and a super secret (SuperSecret1) 404.

Cert-manager 114 may create a new secret, Secret2 406. Similar to Secret1 302, Secret2 406 may be created in namespace1, with identifier label secret-manager.io/identifier and identifier label SuperSecret1.Secret2 406 may include the same key elements as Secret1 302 (e.g., ca.crt, tls.crt, and tls.key), but with different values.

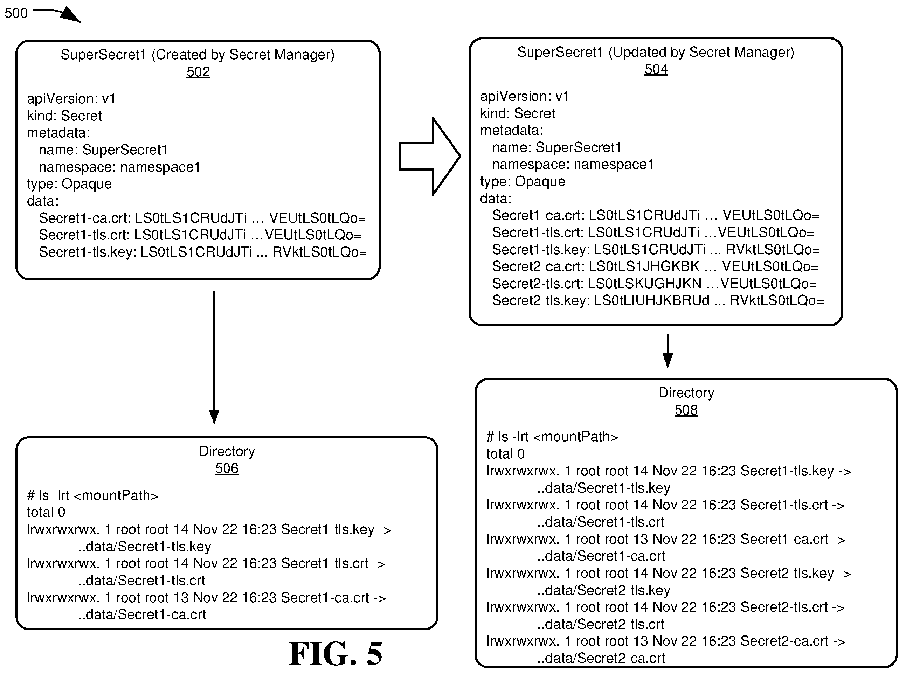

Secret manager 116 may detect the creation of Secret2 406 from event log 118 based on Secret2 including a selected identifier label. Because the namespace and identifier value of Secret2 406 matches an existing super secret, the secret manager 116 may not create a new super secret, and instead may update the existing SuperSecret1 404. The secret manager 116 may update SuperSecret1 404 by copying the key/value data elements from Secret2 406 and appending the name of Secert2 to the key names as described above (e.g., Secret2-ca.crt, Secret2-tls.crt, and Secret2-tls.key). SuperSecret1 404 may therefore include the key/value data elements from both Secret1 302 and Secret2 406. Additionally, since SuperSecret1 404 is already mounted for use by pods, there may be no requirement to restart a pod when Secret2 406 data elements are added to SuperSecret1 404, unlike if Secret2 406 had to be mounted separately. Similarly, data elements may be removed from SuperSecret1 404 without the need to restart any associated pods. The mounting of secrets is discussed in regard to FIG. 5.

FIG. 5 is a diagram of a system 500 configured to perform secret management, in accordance with certain embodiments of the present disclosure. In particular, the example system 500 may depict data objects representing SuperSecret1 in its initially created state 502 and after being updated 504 with additional data objects, as well as corresponding initial directory 506 and updated directory 508.

A super secret created by secret manager 116 should be available for any pod(s) in the same namespace as the super secret. The super secret can be mounted on the pod(s) through volumeMount at a particular MountPath, which in essence creates a directory for the key/value data elements of the super secret to be available as files within the directory. Any addition, deletion, or update performed on a super secret can create or delete the equivalent files from the MountPath directory. As the addition, deletion, or update of the secret data elements causes changes within an existing MountPath directory, the pods to which the secret is mounted do not need to be restarted for the changes to take effect.

As described in the example of FIG. 3, when SuperSecret1 502 is initially created, it may include three key/value pair data elements corresponding to a Secret1302: Secret1-ca.crt, Secret1-tls.crt, and Secret1-tls.key. SuperSecret1 502 may be mounted at a selected mountPath, creating directory 506 including three files within it, corresponding to the three data keys from SuperSecret1 502.

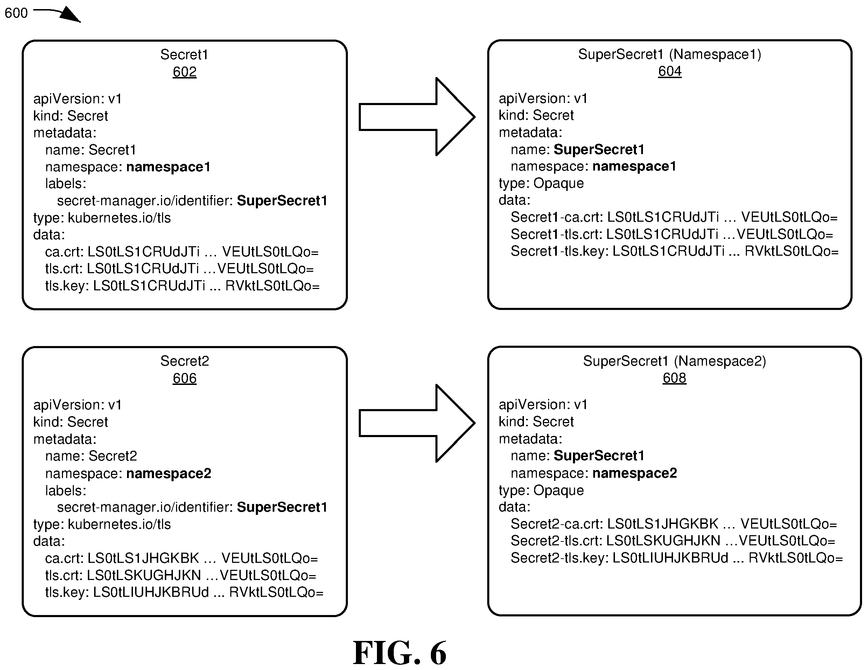

As described in the example of FIG. 4, SuperSecret1 504 may be updated with three additional key/value data elements corresponding to Secret2 406: Secret2-ca.crt, Secret2-tls.crt, and Secret2-tls.key. Updating SuperSecret1 504 did not change the mountPath, and instead merely added additional files to the updated director 508, corresponding to the new keys from Secret2 406. No mounting or unmounting may be required to update the directory 508 with the additional secret data elements, and accordingly no pods must be restarted to access those data elements. An example process of adding a new secret with a same identifier label value in different namespaces is discussed in regard to FIG. 6.

FIG. 6 is a diagram of a system 600 configured to perform secret management, in accordance with certain embodiments of the present disclosure. In particular, the example system 600 may depict data objects representing a first secret, Secret1 602, created in a first namespace (namespace1) and resulting in the creation of a first super secret in the first namespace, SuperSecret1 (namespace1) 604. Further, system 600 may include data objects representing a second secret, Secret2 606, created in a second namespace (namespace2) and resulting in the creation of a second super secret in the namespace2, SuperSecret1 (namespace2), that shares the same name as the super secret from namespace1.

As described above, a super secret created by the secret manager 116 may be created or updated in the same namespace as the secret for which the secret manager received the event notification. While there cannot be two secrets in a single namespace with the same name, there may be two secrets with the same name in different namespaces. Therefore, there can be two super secret with same name (e.g., SuperSecret1) in two different namespaces.

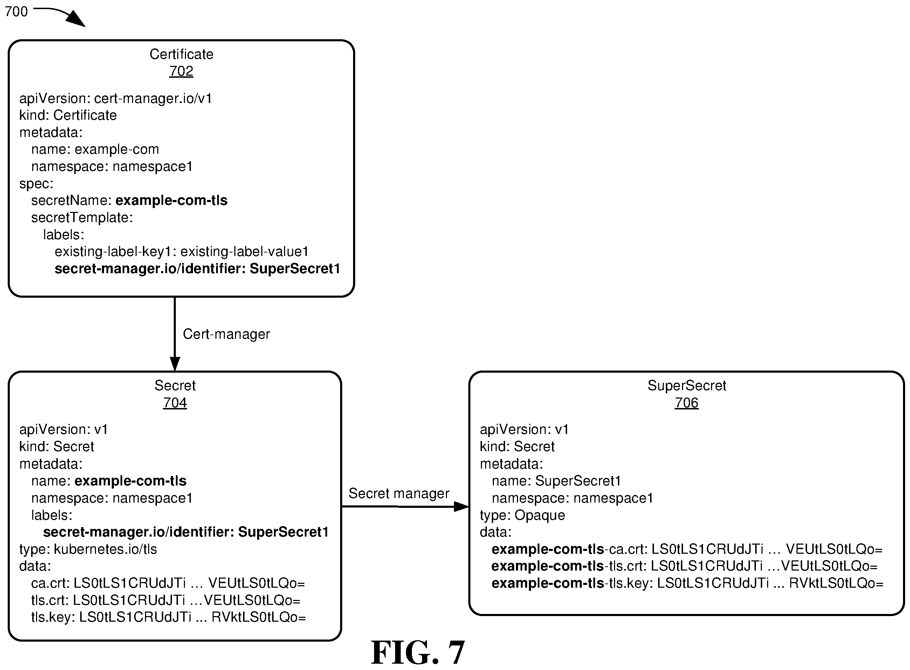

As an example, Secret1 602 may be created in namespace1, having a identifier label value of "SuperSecret1". The secret manager 116 may detect the event for the creation of Secret1 602 in namespace1, and when there is no existing super secret named SuperSecret1, may create SuperSecretl (namespace1) 604. The secret manager 116 may then detect an event for the creation of Secret2 606 in namespace2, also having an identifier label value of SuperSecret1. Even though there is a SuperSecretl 604 in namespace1, there may be no SuperSecret1 in namespace2, and accordingly the secret manager 116 may generate SuperSecret1 (namespace2) 608, without causing any name conflicts in the Kubernetes cluster. An example of secret and super secret generation in the context of digital certificates is described in regard to FIG. 7.

FIG. 7 is a diagram of a system 700 configured to perform secret management, in accordance with certain embodiments of the present disclosure. In particular, the example system 700 may depict data objects representing a Certificate 702, a Secret 704, and SuperSecret 706. System 700 depicts an example embodiment of how the receipt of a Certificate 702 at a Kubernetes cluster can lead to the generation of a Secret 704, which can lead to the generation of a SuperSecret 706.

A certificate 702 may be received by a cert-manager 114 in a Kubernetes cluster 102. The Certificate 702 may include a number of metadata fields, for example to provide a name (e.g., example-com) and a namespace for the Certificate. Additionally, the Certificate 702 metadata may be configured to specify a secretName (to provide a name used in the creation of Secret 704), and a secretTemplate with one or more labels. The labels may be configured to include an identifier label (e.g., secret-manager.io/identifier) and label value (e.g., "SuperSecret1") to be used in creation of the Secret 704, and eventually, in creation of the SuperSecret 706. When configuring a new Certificate 702 with the cert-manager 114, elements such as the label "secret-manager.io/identifier" may be added to the Certificate .yaml file, for example. YAML may refer to a human-readable data-serialization language, and may be used in configuration files and in applications where data is being stored or transmitted.

The cert-manager 114 may receive the Certificate 702 and extract the relevant metadata, and in turn create the Secret 704. For every certificate received, the cert-manager 114 may create an associated Secret, as one example of a source of secrets that can be made available to pods through the secret manager 116 described herein. In the present example, the name of the Secret 704 may be set based on the secretName field of the Certificate 702 (e.g., example-com-tls), and the namespace of the Secret 704 may be set based on the namespace identified in the Certificate 702. Further, a label metadata field may be added to the Secret 704, for example to provide an identifier label recognized by the secret manager 116 (e.g., secret-manager.io/identifier), along with an associated label value which may identify which super secret the keys from Secret 704 should be added to (e.g., SuperSecretl).

When the Secret 704 is generated, an event may be created or logged, for example in an event log 118. The secret manager 116 may monitor the event log, and filter events for secrets including one or more recognized identifier labels. Based on the namespace and identifier label value from Secret 704, the secret manager 116 may update or create a new SuperSecret 706, as described herein. The name of the SuperSecret 706 may be set based on the identifier label value, and data key elements or files from the Secret 704 may be copied to the SuperSecret 706, for example by storing them to a mounted directory for the SuperSecret 706. The secret manager may append the name of the Secret 704 to file or element names of the data keys, so that multiple day keys can be stored in the same directory or volume mount without conflict. This may be accomplished because each secret generated for a namespace may have a unique name, so the appended and updated data key names will also all be unique within a namespace.

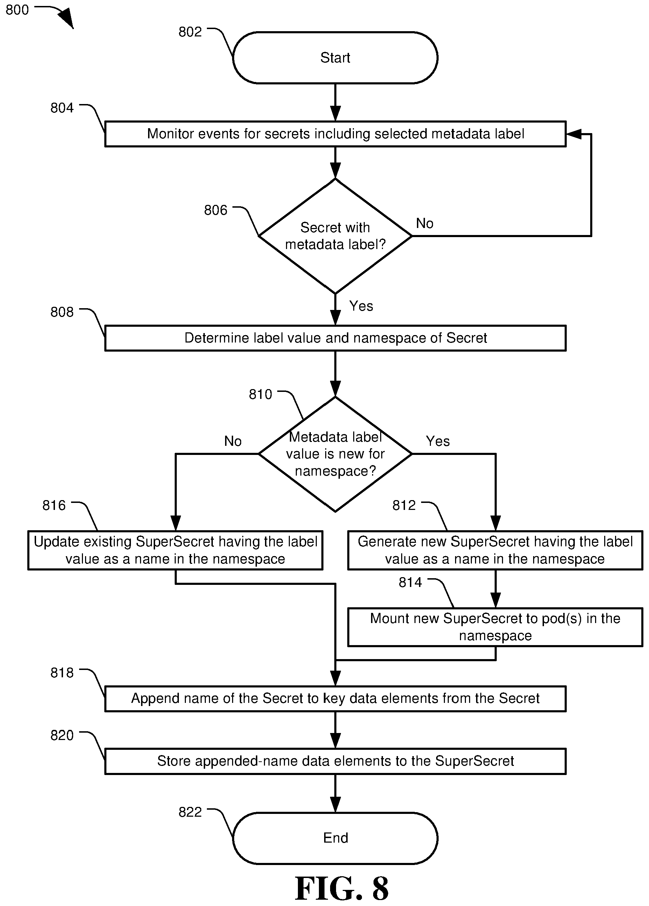

FIG. 8 depicts a flowchart 800 of an example method to perform secret management, in accordance with certain embodiments of the present disclosure. In particular, FIG. 8 may illustrate a process flow by which a super secret may be generated or updated as new secrets are generated, which super secrets may be accessed by application pods without the need to restart the pods. The method may be performed by devices and systems described herein, such as the control plane 108 and secret manager 116 of FIG. 1.

The method may start at 802, and include monitoring events within a cluster for the creation or adding of secrets that include a selected metadata label, at 804. At 806, a determination may be made whether a particular Secret includes the selected metadata label. If not, the method may include continuing to monitor for appropriate secrets, at 804.

When the Secret does include the selected metadata label, at 806, the method may include determining a label value and a namespace of the Secret, at 808. At 810, the method may include determining whether the metadata label value is new for the namespace. For example, the method may include checking whether there are any existing secrets or super secrets having a name that matches the metadata label already created or mounted in the particular namespace.

When the metadata label value is new (e.g., does not match an existing secret), the method may include generating a new SuperSecret having the label value as a name in the namespace, at 812, and potentially mounting the new SuperSecret to one or more pods in the namespace (e.g., via a volumeMount operation to a selected MountPath accessible to one or more pods within the namespace). On the other hand, if the metadata label value from the Secret is not new for the namespace, at 810, the method may include updating an existing SuperSecret having the label value as a name in the namespace, at 816.

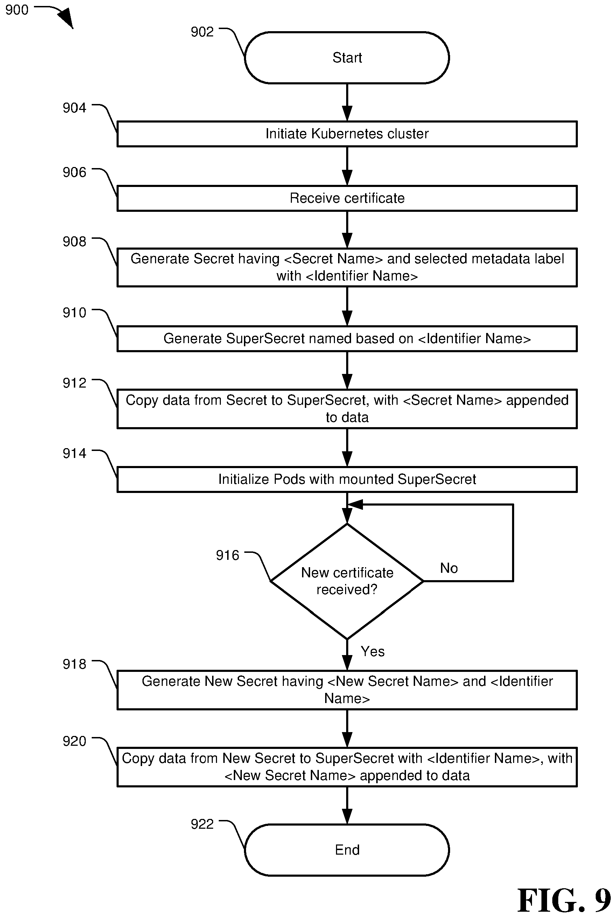

After creating a new SuperSecret, at 812 and 814, or updating an existing SuperSecret, at 816, the method may include appending a name of the Secret to key data elements from the Secret, at 818. This may ensure each key data element from different secrets has a unique name within the namespace. At 820, the method may include storing the appended-name data elements to the SuperSecret, or to a directory or MountPath for the supersecret. The method may then end at 822, or return to monitoring events for secrets, at 804. An example of super secret creation based on a received certificate is described in regard to FIG. 9.

FIG. 9 depicts a flowchart 900 of an example method to perform secret management, in accordance with certain embodiments of the present disclosure. In particular, FIG. 9 may illustrate a process flow by which a super secret may be generated in response to receipt of a digital certificate in a Kubernetes cluster. The method may be performed by devices and systems described herein, such as the control plane 108, and cert-manager 114 and secret manager 116 of FIG. 1.

The method may start at 902, and may include initiating a Kubernetes cluster, at 904. Initiating the cluster may include allocating a number of nodes on which to run one or more pod(s), as well as implementing a control plane including a number of elements for managing the pod(s). The control plane may include a certificate manager (or cert-manager), a secret manager, and an event log.

The method may include receiving a digital certificate, for example via the cert-manager, at 906. At 908, the method may include generating a Secret having a <Secret Name>, and a selected metadata label with an associated label value of <Identifier Name>. The generation of the Secret may be reflected in an event log, which a secret manager may filter for Secrets containing the selected metadata label.

When a Secret with the selected metadata label is identified, the method may include generating a SuperSecret having a name based on the <Identifier Name> from the Secret, at 910. At 912, the method may include copying key data elements from the Secret to the SuperSecret, with <Secret Name> appended to the key data elements. As part of the initialization of the Kubernetes cluster, the method may include initializing one or more pods, with the SuperSecret mounted to provide the pods access to the data elements, at 914.

At 916, the method may include determining whether a new certificate has been received. If not, the method may include continuing to monitor for new certificates, at 916. When a new certificate has been received, at 918, the method may include generating a New Secret having <New Secret Name> as a name, and <Identifier Name> for the metadata label, matching the prior <Identifier Name> from the previous Secret. The method may include copying data from the New Secret to the existing SuperSecret with a name of <Identifier Name>, while appending <New Secret Name> to the data names, at 920. The method may then end, at 922, or return to monitoring for new certificates, at 916.

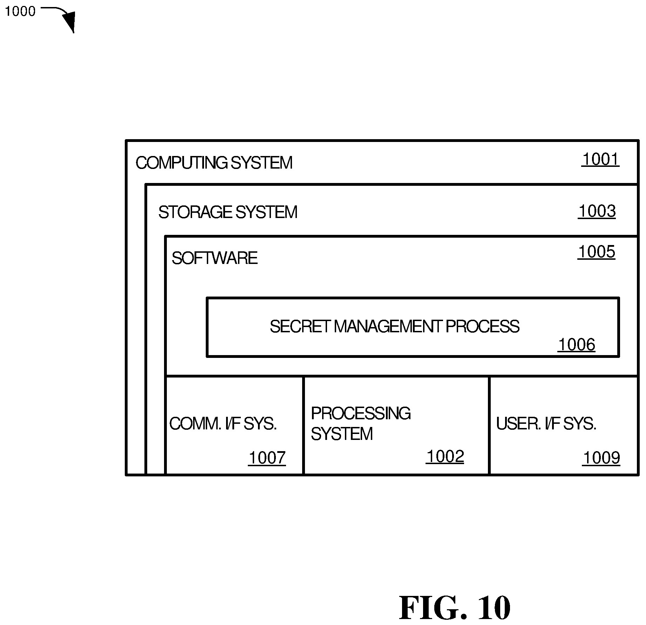

The solutions described herein, of adding additional Secret files to a super secret, may not require restarting the pod(s) as all the new Secret files will be available under the same MountPath. Adding a new Secret will result in having the new files available in the same MountPath. The application pod(s) then can access the required certificates by checking the prefix of the files available in the MountPath. Although the examples provided herein describe adding new Secret files to a super secret, the benefits similarly extend to removing Secret files without the requirement to restart an application pod. For example, after a Secret expires or is selected for removal, an operation can be performed to delete or remove the selected Secret files from the super secret while the super secret remains mounted. A computing system configured to perform the operations and methods described herein is provided in regard to FIG. 10.

FIG. 10 illustrates an apparatus 1000 including a computing system 1001 that is representative of any system or collection of systems in which the various processes, systems, programs, services, and scenarios disclosed herein may be implemented. For example, computing system 1001 may be an example of Kubernetes Cluster 102, Node 1 110, Node 2 112, Control Plane 108, cert-manager 114, secret manager 116, Events 118, or CA 104 of FIG. 1. Examples of computing system 1001 include, but are not limited to, server computers, desktop computers, laptop computers, routers, web servers, cloud computing platforms, and data center equipment, as well as any other type of physical or virtual server machine, physical or virtual router, container, and any variation or combination thereof.

Computing system 1001 may be implemented as a single apparatus, system, or device or may be implemented in a distributed manner as multiple apparatuses, systems, or devices. Computing system 1001 may include, but is not limited to, processing system 1002, storage system 1003, software 1005, communication interface system 1007, and user interface system 1009. Processing system 1002 may be operatively coupled with storage system 1003, communication interface system 1007, and user interface system 1009.

Processing system 1002 may load and execute software 1005 from storage system 1003. Software 1005 may include and implement secret management process 1006, which may be representative of any of the operations for generating or removing secrets or super secrets, receiving digital certificates, mounting volumes or creating directories, or other secret management operations discussed with respect to the preceding figures. When executed by processing system 1002 to determine and implement a secret management process, software 1005 may direct processing system 1002 to operate as described herein for at least the various processes, operational scenarios, and sequences discussed in the foregoing implementations. Computing system 1001 may optionally include additional devices, features, or functionality not discussed for purposes of brevity.

In some embodiments, processing system 1002 may comprise a micro-processor and other circuitry that retrieves and executes software 1005 from storage system 1003. Processing system 1002 may be implemented within a single processing device but may also be distributed across multiple processing devices or sub-systems that cooperate in executing program instructions. Examples of processing system 1002 may include general purpose central processing units, graphical processing units, application specific processors, and logic devices, as well as any other type of processing device, combinations, or variations thereof.

Storage system 1003 may comprise any memory device or computer readable storage media readable by processing system 1002 and capable of storing software 1005. Storage system 1003 may include volatile and nonvolatile, removable and non-removable media implemented in any method or technology for storage of information, such as computer readable instructions, data structures, program modules, or other data. Examples of storage media include random access memory, read only memory, magnetic disks, optical disks, optical media, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 1003 may also include computer readable communication media over which at least some of software 1005 may be communicated internally or externally. Storage system 1003 may be implemented as a single storage device but may also be implemented across multiple storage devices or sub-systems co-located or distributed relative to each other. Storage system 1003 may comprise additional elements, such as a controller, capable of communicating with processing system 1002 or possibly other systems.

Software 1005 (including secret management process 1006 among other functions) may be implemented in program instructions that may, when executed by processing system 1002, direct processing system 1002 to operate as described with respect to the various operational scenarios, sequences, and processes illustrated herein. For example, software 1005 may include program instructions for receiving digital certificates, generating or removing secrets, monitoring event logs, generating super secrets, copying secret key data files or elements, and mounting volumes or directories for use by application pods, as described herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 1005 may include additional processes, programs, or components, such as operating system software, virtualization software, or other application software. Software 1005 may also comprise firmware or some other form of machine-readable processing instructions executable by processing system 1002.

In general, software 1005 may, when loaded into processing system 1002 and executed, transform a suitable apparatus, system, or device (of which computing system 1001 is representative) overall from a general-purpose computing system into a special-purpose computing system customized to implement a bundled binding audit process as described herein. Indeed, encoding software 1005 on storage system 1003 may transform the physical structure of storage system 1003. The specific transformation of the physical structure may depend on various factors in different implementations of this description. Examples of such factors may include, but are not limited to, the technology used to implement the storage media of storage system 1003 and whether the computer-storage media are characterized as primary or secondary storage, as well as other factors.

For example, if the computer readable storage media are implemented as semiconductor-based memory, software 1005 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 1007 may include communication connections and devices that allow for communication with other computing systems (not shown) over communication networks (not shown). Examples of connections and devices that together allow for inter-system communication may include network interface cards, antennas, power amplifiers, radio-frequency (RF) circuitry, transceivers, and other communication circuitry. The connections and devices may communicate over communication media to exchange communications with other computing systems or networks of systems, such as metal, glass, air, or any other suitable communication media.

Communication between computing system 1001 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof.

While some examples provided herein are described in the context of Kubernetes containerized software environments, it should be understood the systems and methods described herein for secret management are not limited to such embodiments, and may apply to a variety of other containerized or virtualized software environments and their associated systems. As will be appreciated by one skilled in the art, aspects of the presently taught teachniques may be embodied as a system, method, computer program product, and other configurable systems. Accordingly, aspects of the presently taught teachniques may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the presently taught teachniques may take the form of a computer readable medium coprising instruction for putting the described techniques into effect. Such a computer readable medium may relate to a a program product which may be embodied in one or more memory devices and/or one or more transmission media having computer readable program code embodied thereon.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number respectively. The word "or," in reference to a list of two or more items, covers all the following interpretations of the word: any of the items in the list, all the items in the list, and any combination of the items in the list.

The phrases "in some embodiments," "according to some embodiments," "in the embodiments shown," "in other embodiments," and the like generally mean the particular feature, structure, or characteristic following the phrase is included in at least one implementation of the present technology, and may be included in more than one implementation. In addition, such phrases do not necessarily refer to the same embodiments or different embodiments.

The above Detailed Description of examples of the technology is not intended to be exhaustive or to limit the technology to the precise form disclosed above. While specific examples for the technology are described above for illustrative purposes, various equivalent modifications are possible within the scope of the technology, as those skilled in the relevant art will recognize. For example, while processes or blocks are presented in a given order, alternative implementations may perform routines having steps, or employ systems having blocks, in a different order, and some processes or blocks may be deleted, moved, added, subdivided, combined, and/or modified to provide alternative or sub combinations. Each of these processes or blocks may be implemented in a variety of different ways. Also, while processes or blocks are at times shown as being performed in series, these processes or blocks may instead be performed or implemented in parallel, or may be performed at different times. Further any specific numbers noted herein are only examples: alternative implementations may employ differing values or ranges.

The teachings of the technology provided herein can be applied to other systems, not necessarily the system described above. The elements and acts of the various examples described above can be combined to provide further implementations of the technology. Some alternative implementations of the technology may include not only additional elements to those implementations noted above, but also may include fewer elements.

These and other changes can be made to the technology in light of the above Detailed Description. While the above description describes certain examples of the technology, and describes the best mode contemplated, no matter how detailed the above appears in text, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the above Detailed Description section explicitly defines such terms. Accordingly, the actual scope of the technology encompasses not only the disclosed examples, but also all equivalent ways of practicing or implementing the technology under the claims.

To reduce the number of claims, certain aspects of the technology are presented below in certain claim forms, but the applicant contemplates the various aspects of the technology in any number of claim forms. For example, while only one aspect of the technology is recited as a computer-readable medium claim, other aspects may likewise be embodied as a computer-readable medium claim, or in other forms, such as being embodied in a means-plus-function claim.

Therefore, from one perspective, there have been described various systems and methods for managing secrets in a virtual or containerized software environment. A secret management system may enable secrets to be added to an application pod of a virtual software environment without restarting the application pod, wherein a secret may include a data object containing sensitive data. The secret management process may monitor for creation of a first secret in the virtual software environment, append a name of the first secret to a key file from the first secret to produce an appended key file, and store the appended key file to a super secret, the super secret including a specialized secret configured to contain key files from multiple secrets.

## Claims

1. A secret management system, comprising:
one or more processors; and
a memory having stored thereon instructions that, upon execution by the one or more processors, cause the one or more processors to implement a secret management process (1006) to enable secrets (202, 302, 406, 602, 606, 704) to be added to an application pod (120, 122, 124) of a virtual software environment without restarting the application pod, a secret including a data object containing sensitive data, including:
monitor for creation of a first secret in the virtual software environment (804);
determine whether the first secret includes a selected metadata label (806);
in response to determining the first secret includes the selected metadata label:
determine a first value associated with the selected metadata label and a first namespace associated with the first secret (808);
determine whether the first value corresponds to an existing super secret in the first namespace (810); and
in response to determining the first value does correspond to an existing super secret in the first namespace:
append a name of the first secret to a key file from the first secret to produce an appended key file (818); and
store the appended key file to a super secret as the existing super secret (820), the super secret including a specialized secret configured to contain key files from multiple secrets; and
in response to the first secret not including the selected metadata label, do not append the name of the first secret to the key file or store the appended key file to the super secret (130, 132, 134).

2. The secret management system of claim 1, further comprising instructions that, upon execution, cause the one or more processors to:
detect creation of a second secret having:
a second namespace associated with the second secret;
the selected metadata label; and
a second value associated with the selected metadata label that is the same as the first value;
determine whether the second namespace is the same as the first namespace;
when the second namespace is different than the first namespace,
generate a new super secret in the second namespace; and
store a second appended key file from the second secret to the new super secret; and
when the second namespace is the same as the first namespace,
store the second appended key file from the second secret to the super secret in the first namespace.

3. The secret management system of any of claims 1 to 2, further comprising instructions that, upon execution, cause the one or more processors to:
in response to determining the first value does not correspond to an existing super secret in the first namespace, generate the super secret, including setting a name for the super secret based on the first value.

4. The secret management system of claim 3, further comprising instructions that, upon execution, cause the one or more processors to:
mount the super secret to the application pod during initialization of the application pod, including storing the appended key file to a directory accessible to the application pod.

5. The secret management system of any of claims 1 to 4, further comprising instructions that, upon execution, cause the one or more processors to:
in response to detecting creation of the first secret, generating the super secret; and
mounting the super secret to the application pod during initialization of the application pod, including storing the appended key file to a directory accessible to the application pod.

6. The secret management system of any preeding claim, further comprising instructions that, upon execution, cause the one or more processors to:
detect creation of a second secret in the virtual software environment;
append a second name of the second secret to a second key file from the second secret to produce a second appended key file; and
store the second appended key file to the super secret.

7. The secret management system of any preeding claim, further comprising instructions that, upon execution, cause the one or more processors to:
receive a digital certificate at a certificate manager; and
generate, via the certificate manager, the first secret based on the digital certificate.

8. The secret management system of any preeding claim, further comprising instructions that, upon execution, cause the one or more processors to:
initiate the virtual software environment as a Kubernetes cluster;
initiate the application pod after initiation of the Kubernetes cluster;
mount the super secret to the application pod during initiation of the application pod;
add secret key files to the super secret without restarting the application pod; and
remove the secret key files from the super secret without restarting the application pod.

9. A method comprising: operating a secret management system to enable secrets to be added to an application pod (120, 122, 124) of a virtual software environment without restarting the application pod, a secret (202, 302, 406, 602, 606, 704) including a data object containing sensitive data, including:
monitoring for creation of a first secret in the virtual software environment (804);
determining whether the first secret includes a selected metadata label (806);
in response to determining the first secret includes the selected metadata label:
determining a first value associated with the selected metadata label and a first namespace associated with the first secret (808);
determining whether the first value corresponds to an existing super secret in the first namespace (810); and
in response to determining the first value does correspond to an existing super secret in the first namespace:
appending a name of the first secret to a key file from the first secret to produce an appended key file (818); and
storing the appended key file to a super secret as the existing super secret (820), the super secret including a specialized secret configured to contain key files from multiple secrets; and
in response to the first secret not including the selected metadata label, not appending the name of the first secret to the key file or store the appended key file to the super secret (130, 132, 134).

10. The method of claim 9 further comprising steps corresponding to the fnctions caused by the instructions of any of claims 2 to 8.

11. A computer readable medium comprising instructions that, when executed by one or more processors of a programmable computer, cause the programmable computer to become configured as the secret management system of any of claims 1 to 8.

## Patentansprüche

1. Geheimverwaltungssystem, das Folgendes umfasst:
einen oder mehrere Prozessoren; und
einen Speicher mit darauf gespeicherten Anweisungen, die bei Ausführung durch den einen oder die mehreren Prozessoren bewirken, dass der eine oder die mehreren Prozessoren einen Geheimverwaltungsprozess (1006) implementieren, um zu ermöglichen, dass Geheimnisse (202, 302, 406, 602, 606, 704) zu einem Anwendungs-Pod (120, 122, 124) einer virtuellen Softwareumgebung hinzugefügt werden, ohne den Anwendungs-Pod neu zu starten, wobei ein Geheimnis ein Datenobjekt beinhaltet, das sensible Daten enthält, einschließlich:
die Erstellung eines ersten Geheimnisses in der virtuellen Softwareumgebung (804) zu überwachen;
zu bestimmen, ob das erste Geheimnis ein ausgewähltes Metadatenlabel beinhaltet (806);
als Reaktion auf das Bestimmen, dass das erste Geheimnis das ausgewählte Metadatenlabel beinhaltet:
einen ersten Wert zu bestimmen, der mit dem ausgewählten Metadatenlabel assoziiert ist, und einen ersten Namespace, der mit dem ersten Geheimnis assoziiert ist (808);
zu bestimmen, ob der erste Wert einem vorhandenen Supergeheimnis in dem ersten Namespace entspricht (810); und
als Reaktion auf das Bestimmen, dass der erste Wert einem bestehenden Supergeheimnis in dem ersten Namespace entspricht:
einen Namen des ersten Geheimnisses an eine Schlüsseldatei aus dem ersten Geheimnis anzuhängen, um eine angehängte Schlüsseldatei zu produzieren (818); und
die angehängte Schlüsseldatei zu einem Supergeheimnis als das bestehende Supergeheimnis (820) zu speichern, wobei das Supergeheimnis ein spezialisiertes Geheimnis beinhaltet, das dazu konfiguriert ist, Schlüsseldateien aus mehreren Geheimnissen zu enthalten; und
als Reaktion darauf, dass das erste Geheimnis das ausgewählte Metadatenlabel nicht beinhaltet, den Namen des ersten Geheimnisses nicht an die Schlüsseldatei anzuhängen oder die angehängte Schlüsseldatei nicht zu dem Supergeheimnis (130, 132, 134) zu speichern.

2. Geheimverwaltungssystem nach Anspruch 1, das ferner Anweisungen umfasst, die bei Ausführung bewirken, dass der eine oder die mehreren Prozessoren:
die Erstellung eines zweiten Geheimnisses mit Folgendem detektieren:
einen zweiten Namespace, der mit dem zweiten Geheimnis assoziiert ist;
das ausgewählte Metadatenlabel; und
einem zweiten Wert, der mit dem ausgewählten Metadatenlabel assoziiert ist, der gleich dem ersten Wert ist;
zu bestimmen, ob der zweite Namespace dem ersten Namespace gleicht;
wenn sich der zweite Namespace von dem ersten Namespace unterscheidet,
ein neues Supergeheimnis im zweiten Namespace zu erzeugen; und
eine zweite angehängte Schlüsseldatei vom zweiten Geheimnis in das neue Supergeheimnis zu speichern; und
wenn der zweite Namespace mit dem ersten Namespace identisch ist,
die zweite angehängte Schlüsseldatei vom zweiten Geheimnis in das Supergeheimnis im ersten Namespace zu speichern.

3. Geheimverwaltungssystem nach einem der Ansprüche 1 bis 2, das ferner Anweisungen umfasst, die bei Ausführung bewirken, dass der eine oder die mehreren Prozessoren: als Reaktion auf das Bestimmen, dass der erste Wert nicht einem bestehenden Supergeheimnis in dem ersten Namespace entspricht, das Supergeheimnis zu erzeugen, einschließlich des Setzens eines Namens für das Supergeheimnis basierend auf dem ersten Wert.

4. Geheimverwaltungssystem nach Anspruch 3, das ferner Anweisungen umfasst, die bei Ausführung bewirken, dass der eine oder die mehreren Prozessoren:
das Supergeheimnis während der Initialisierung des Anwendungs-Pods an den Anwendungs-Pod zu mounten, einschließlich Speichern der angehängten Schlüsseldatei in einem Verzeichnis, auf das der Anwendungs-Pod zugreifen kann.

5. Geheimverwaltungssystem nach einem der Ansprüche 1 bis 4, das ferner Anweisungen umfasst, die bei Ausführung bewirken, dass der eine oder die mehreren Prozessoren:
als Reaktion auf das Detektieren der Erstellung des ersten Geheimnisses das Supergeheimnis erzeugen; und
Mounten des Supergeheimnisses auf dem Anwendungs-Pod während der Initialisierung des Anwendungs-Pods, einschließlich Speichern der angehängten Schlüsseldatei in einem Verzeichnis, auf das der Anwendungs-Pod zugreifen kann.

6. Geheimverwaltungssystem nach einem der vorhergehenden Ansprüche, das ferner Anweisungen umfasst, die bei Ausführung bewirken, dass der eine oder die mehreren Prozessoren:
die Erstellung eines zweiten Geheimnisses in der virtuellen Softwareumgebung detektieren;
einen zweiten Namen des zweiten Geheimnisses an eine zweite Schlüsseldatei aus dem zweiten Geheimnis anzuhängen, um eine zweite angehängte Schlüsseldatei zu produzieren; und
die zweite angehängte Schlüsseldatei zu dem Supergeheimnis zu speichern.

7. Geheimverwaltungssystem nach einem der vorhergehenden Ansprüche, das ferner Anweisungen umfasst, die bei Ausführung bewirken, dass der eine oder die mehreren Prozessoren:
ein digitales Zertifikat bei einem Zertifikatmanager empfangen; und
über den Zertifikatmanager das erste Geheimnis basierend auf dem digitalen Zertifikat zu erzeugen.

8. Geheimverwaltungssystem nach einem der vorhergehenden Ansprüche, das ferner Anweisungen umfasst, die bei Ausführung bewirken, dass der eine oder die mehreren Prozessoren:
die virtuelle Softwareumgebung als Kubernetes-Cluster initiieren;
den Anwendungs-Pod nach Initiierung des Kubernetes-Clusters initiieren;
das Supergeheimnis während der Initiierung des Anwendungs-Pods auf den Anwendungs-Pod mounten;
geheime Schlüsseldateien zum Supergeheimnis hinzufügen, ohne den Anwendungs-POD neu zu starten; und
die geheimen Schlüsseldateien aus dem Supergeheimnis zu entfernen, ohne den Anwendungs-Pod neu zu starten.

9. Verfahren, das Folgendes umfasst:
Betreiben eines Geheimverwaltungssystems, um zu ermöglichen, dass Geheimnisse zu einem Anwendungs-Pod (120, 122, 124) einer virtuellen Softwareumgebung hinzugefügt werden, ohne den Anwendungs-Pod neu zu starten, ein Geheimnis (202, 302, 406, 602, 606, 704) einschließlich eines Datenobjekts, das sensible Daten enthält, einschließlich:
Überwachen der Erstellung eines ersten Geheimnisses in der virtuellen Softwareumgebung (804);
Bestimmen, ob das erste Geheimnis ein ausgewähltes Metadatenlabel beinhaltet (806);
als Reaktion auf das Bestimmen, dass das erste Geheimnis das ausgewählte Metadatenlabel beinhaltet:
Bestimmen eines ersten Werts, der mit dem ausgewählten Metadatenlabel assoziiert ist, und eines ersten Namespace, der mit dem ersten Geheimnis assoziiert ist (808);
Bestimmen, ob der erste Wert einem bestehenden Supergeheimnis in dem ersten Namespace entspricht (810); und
als Reaktion auf das Bestimmen, dass der erste Wert einem bestehenden Supergeheimnis in dem ersten Namespace entspricht:
Anhängen eines Namens des ersten Geheimnisses an eine Schlüsseldatei aus dem ersten Geheimnis, um eine angehängte Schlüsseldatei zu produzieren (818); und
Speichern der angehängten Schlüsseldatei zu einem Supergeheimnis als das bestehende Supergeheimnis (820), wobei das Supergeheimnis ein spezialisiertes Geheimnis beinhaltet, das dazu konfiguriert ist, Schlüsseldateien aus mehreren Geheimnissen zu enthalten; und
als Reaktion darauf, dass das erste Geheimnis das ausgewählte Metadatenlabel nicht beinhaltet, den Namen des ersten Geheimnisses nicht an die Schlüsseldatei anzuhängen oder die angehängte Schlüsseldatei nicht zu dem Supergeheimnis (130, 132, 134) zu speichern.

10. Verfahren nach Anspruch 9, das ferner Schritte umfasst, die den Funktionen entsprechen, die durch die Anweisungen nach einem der Ansprüche 2 bis 8 bewirkt werden.

11. Computerlesbares Medium, das Anweisungen umfasst, die, wenn sie durch einen oder mehrere Prozessoren eines programmierbaren Computers ausgeführt werden, bewirken, dass der programmierbare Computer als das Geheimverwaltungssystem nach einem der Ansprüche 1 bis 8 konfiguriert wird.

## Revendications

1. Système de gestion de secrets, comportant :
un ou plusieurs processeurs ; et
une mémoire sur laquelle sont stockées des instructions qui, suite à leur exécution par le ou les processeurs, amènent le ou les processeurs à mettre en œuvre un processus (1006) de gestion de secrets pour permettre à des secrets (202, 302, 406, 602, 606, 704) d'être ajoutés à une capsule (120, 122, 124) d'application d'un environnement logiciel virtuel sans redémarrer la capsule d'application, un secret incluant un objet de données contenant des données sensibles, ce qui comprend les actions de :
surveiller la création d'un premier secret dans l'environnement logiciel virtuel (804) ;
déterminer si le premier secret inclut une étiquette de métadonnées sélectionnée (806) ;
en réaction à la détermination du fait que le premier secret inclut l'étiquette de métadonnées sélectionnée :
déterminer une première valeur associée à l'étiquette de métadonnées sélectionnée et un premier espace de nommage associé au premier secret (808) ;
déterminer si la première valeur correspond à un super-secret existant dans le premier espace de nommage (810) ; et
en réaction à la détermination du fait que la première valeur correspond bien à un super-secret existant dans le premier espace de nommage :
joindre un nom du premier secret à un fichier de clés issu du premier secret pour produire un fichier de clés joint (818) ; et
stocker le fichier de clés joint dans un super-secret en tant que super-secret existant (820), le super-secret incluant un secret spécialisé configuré pour contenir des fichiers de clés issus de multiples secrets ; et
en réaction au fait que le premier secret n'inclue pas l'étiquette de métadonnées sélectionnée, ne pas joindre le nom du premier secret au fichier de clés ni stocker le fichier de clés joint dans le super-secret (130, 132, 134).

2. Système de gestion de secrets selon la revendication 1, comportant en outre des instructions qui, suite à leur exécution, amènent le ou les processeurs à :
détecter la création d'un second secret comprenant :
un second espace de nommage associé au second secret ;
l'étiquette de métadonnées sélectionnée ; et
une seconde valeur associée à l'étiquette de métadonnées sélectionnée qui est la même que la première valeur ;
déterminer si le second espace de nommage est le même que le premier espace de nommage ;
lorsque le second espace de nommage est différent du premier espace de nommage,
générer un nouveau super-secret dans le second espace de nommage ; et
stocker un second fichier de clés joint issu du second secret dans le nouveau super-secret ; et
lorsque le second espace de nommage est le même que le premier espace de nommage,
stocker le second fichier de clés joint issu du second secret dans le super-secret dans le premier espace de nommage.

3. Système de gestion de secrets selon l'une quelconque des revendications 1 à 2, comportant en outre des instructions qui, suite à leur exécution, amènent le ou les processeurs à :
en réaction à la détermination du fait que la première valeur ne correspond pas à un super-secret existant dans le premier espace de nommage, générer le super-secret, ce qui comprend le fait de spécifier un nom pour le super-secret d'après la première valeur.

4. Système de gestion de secrets selon la revendication 3, comportant en outre des instructions qui, suite à leur exécution, amènent le ou les processeurs à :
monter le super-secret sur la capsule d'application pendant l'initialisation de la capsule d'application, ce qui comprend le stockage du fichier de clés joint dans un répertoire accessible à la capsule d'application.

5. Système de gestion de secrets selon l'une quelconque des revendications 1 à 4, comportant en outre des instructions qui, suite à leur exécution, amènent le ou les processeurs à :
en réaction à la détection de la création du premier secret, générer le super-secret ; et
monter le super-secret sur la capsule d'application pendant l'initialisation de la capsule d'application, ce qui comprend le stockage du fichier de clés joint dans un répertoire accessible à la capsule d'application.

6. Système de gestion de secrets selon l'une quelconque des revendications précédentes, comportant en outre des instructions qui, suite à leur exécution, amènent le ou les processeurs à :
détecter la création d'un second secret dans l'environnement logiciel virtuel ;
joindre un second nom du second secret à un second fichier de clés issu du second secret pour produire un second fichier de clés joint ; et
stocker le second fichier de clés joint dans le super-secret.

7. Système de gestion de secrets selon l'une quelconque des revendications précédentes, comportant en outre des instructions qui, suite à leur exécution, amènent le ou les processeurs à :
recevoir un certificat numérique au niveau d'un gestionnaire de certificats ; et
générer, par l'intermédiaire du gestionnaire de certificats, le premier secret sur la base du certificat numérique.

8. Système de gestion de secrets selon l'une quelconque des revendications précédentes, comportant en outre des instructions qui, suite à leur exécution, amènent le ou les processeurs à :
lancer l'environnement logiciel virtuel comme une grappe Kubernetes ;
lancer la capsule d'application après le lancement de la grappe Kubernetes ;
monter le super-secret sur la capsule d'application pendant le lancement de la capsule d'application ;
ajouter des fichiers de clés secrets au super-secret sans redémarrer la capsule d'application ; et
retirer les fichiers de clés secrets du super-secret sans redémarrer la capsule d'application.

9. Procédé comportant les étapes consistant à :
faire fonctionner un système de gestion de secrets pour permettre à des secrets d'être ajoutés à une capsule (120, 122, 124) d'application d'un environnement logiciel virtuel sans redémarrer la capsule d'application, un secret (202, 302, 406, 602, 606, 704) incluant un objet de données contenant des données sensibles, ce qui comprend les actions de :
surveiller la création d'un premier secret dans l'environnement logiciel virtuel (804) ;
déterminer si le premier secret inclut une étiquette de métadonnées sélectionnée (806) ;
en réaction à la détermination du fait que le premier secret inclut l'étiquette de métadonnées sélectionnée :
déterminer une première valeur associée à l'étiquette de métadonnées sélectionnée et un premier espace de nommage associé au premier secret (808) ;
déterminer si la première valeur correspond à un super-secret existant dans le premier espace de nommage (810) ; et
en réaction à la détermination du fait que la première valeur correspond bien à un super-secret existant dans le premier espace de nommage :
joindre un nom du premier secret à un fichier de clés issu du premier secret pour produire un fichier de clés joint (818) ; et
stocker le fichier de clés joint dans un super-secret en tant que super-secret existant (820), le super-secret incluant un secret spécialisé configuré pour contenir des fichiers de clés issus de multiples secrets ; et
en réaction au fait que le premier secret n'inclue pas l'étiquette de métadonnées sélectionnée, ne pas joindre le nom du premier secret au fichier de clés ni stocker le fichier de clés joint dans le super-secret (130, 132, 134).

10. Procédé selon la revendication 9 comportant en outre des étapes correspondant aux fonctions causées par les instructions de l'une quelconque des revendications 2 à 8.

11. Support lisible par ordinateur comportant des instructions qui, lorsqu'elles sont exécutées par un ou plusieurs processeurs d'un ordinateur programmable, amènent l'ordinateur programmable à devenir configuré comme le système de gestion de secrets selon l'une quelconque des revendications 1 à 8.
